# EUROPEAN PATENT APPLICATION

(11) **EP 0 621 677 A2**
(43) Date of publication of application: **26.10.1994**
(21) Application number: 94200832.7
(22) Date of filing: 29.03.1994
(51) Int. Cl.: H02K 19/06, H02K 1/27

(54) **Rotor assembly**

(30) Priority: 20.04.1993 US 48913
(71) Applicant: GENERAL MOTORS CORPORATION, Detroit Michigan 48202 (US)
(72) Inventor: El-Antably, Ahmed Mostafa, Indianapolis, Indiana 46240 (US); Klemen, Donald, Carmel, Indiana 46032 (US)
(74) Representative: Denton, Michael John

(57) **Abstract**

A rotor assembly for a synchronous reluctance dynamo/motor machine has a plurality of axial laminations (25,26) formed of alternate magnetic and non-magnetic materials. The rotor (15,see Fig.4) comprising the arms (181-180) with wholes for the threaded fasteners (53) and the supporting shaft (13) has an end cap (14,see Fig.1) on each axial end which engages stepped axial ends (33-35) of the laminations.

## Description

The present invention relates to a rotor assembly for use, for example, with synchronous speed dynamo/motor machines.

A synchronous reluctance motor is a synchronous machine which has a stator with poly-phase windings forming a plurality of poles similar to induction motors. The reluctance motor also includes a rotor which does not use windings or permanent magnets but which has the same number of poles as the stator. The rotor is manufactured as an anisotropic structure, with each pair of poles of the motor having a direction of minimum reluctance, the direct axis, and a direction of maximum reluctance, the quadrature axis.

A synchronous reluctance motor is similar to other synchronous motors with the distinct difference of having no DC excitation. That is, the motor does not have brushes and slip rings. The stator windings of the synchronous reluctance motor are substantially identical to those employed in poly-phase induction motors with the added advantage of operating efficiently with concentric windings which are similar to the salient pole windings used in DC motors. The rotors of the synchronous reluctance motor are constructed to have different values of reluctance between the direct and quadrature axes. This provides an easy flux path for the direct axis in comparison to the quadrature axis. The magnetic performance index ratio (direct axis to quadrature axis reluctance) affects the performance of the synchronous reluctance motor. The higher the ratio, the better the performance of the synchronous reluctance motor. Conventional reluctance motors exhibit a performance index ratio of approximately five.

By providing a rotating field in the stator windings, a magnetomotive force is created in the rotor which results in an attempt to align with the magnetomotive force generated in the stator. The rotor tends to displace the direct axis of minimum reluctance until the alignment of the fields is attained resulting in the rotor being driven at a synchronous speed proportional to the rotating field in the stator. In order that maximum power can be derived from the motor, it is desirable to maximise the ratio of the direct-to-quadrature axis reactance.

The present invention seeks to provide an improved rotor assembly for an asynchronous reluctance machine.

According to an aspect of the present invention, there is provided a rotor assembly as specified in claim 1.

A preferred embodiment utilises magnetic laminations interleaved alternately with non-magnetic and non-conducting separators inserted axially between radially extending arms. The arms are formed with a smooth, U-shaped recess therebetween, the laminations being secured within each recess. The laminations are secured in situ by means of radial fasteners and end caps. The end caps are cup-shaped members with an axially extending outer rim which is disposed adjacent the outermost periphery of the laminations. Such a motor can operate at higher efficiencies than induction motors and can also rotate at higher operating speeds.

Preferably, the rotor includes centrifugal retainment end caps. Such end caps can permit increased operating speeds and can provide improved radial support for the rotor laminations.

The rotor assembly can provide high mechanical strength, improved magnetic isolation and lower eddy current loses.

In an embodiment, the rotor has a star-like configuration with S-glass or carbon fibres being oriented to provide optimisation of stress distribution.

In some embodiments, it is possible to a rotor assembly which can be employed in a synchronous reluctance machine to give a significantly increased rotor saliency ratio, a reduced rotor inertia and thereby greater response for advanced variable speed applications and a magnetic performance index (ratio of direct-axis to quadrature-axis reactance) greater than eight and possibly greater than approximately fifteen, in dependence upon the thickness of the non-magnetic laminations.

The rotor assembly may be fabricated with a composite core which may be moulded of high tensile strength S-glass, carbon fibre or an optimum layer of both.

The rotor core may include a body portion with equiangularly spaced, radially extending arms. The reinforcing glass fibre strands may be laid-up with strands oriented both axially and transversely to the rotational axis of the rotor. This orientation can provide improved operating characteristics.

A concave or U-shaped axially extending recess may be formed between adjacent arms. These recesses may be filled with alternate laminations of magnetic and non-magnetic materials such as iron and high tensile fibre glass, which laminations may be secured to the core and to each other with high temperature cure epoxy and with radially installed, threaded fasteners. The axial ends of each arm may be stepped such that the length of each successive, radially outward step is axially reduced. The laminations in the recesses between adjacent arms may have a length equal to the axial length of the arm at equal radial dimensions. Thus, the core, laminations and fasteners, may have axial end surfaces which present a plurality of circumferential steps.

Each axial end may be enclosed by an end cap having a plurality of circumferential steps complementary to the axial ends of the core sub-assembly. A radially disposed, circumferential support wall may be provided for the laminations at each step surface. The end caps may be secured on the sub-assembly by a plurality of fastening devices which extend axially through the composite core. Such a structure can improve the resistance of the rotor assembly to radial expansion resulting from centrifugal forces.

An embodiment of the present invention is described below, by way of example only, with reference to the accompanying drawings, in which:
Figure 1 is a side elevational view, partly in cross-section, of an embodiment of rotor;
Figure 2 is a cross-sectional view taken substantially along line 2-2 of Figure 1;
Figure 2A is an enlarged area of a portion of the cross-section of Figure 2;

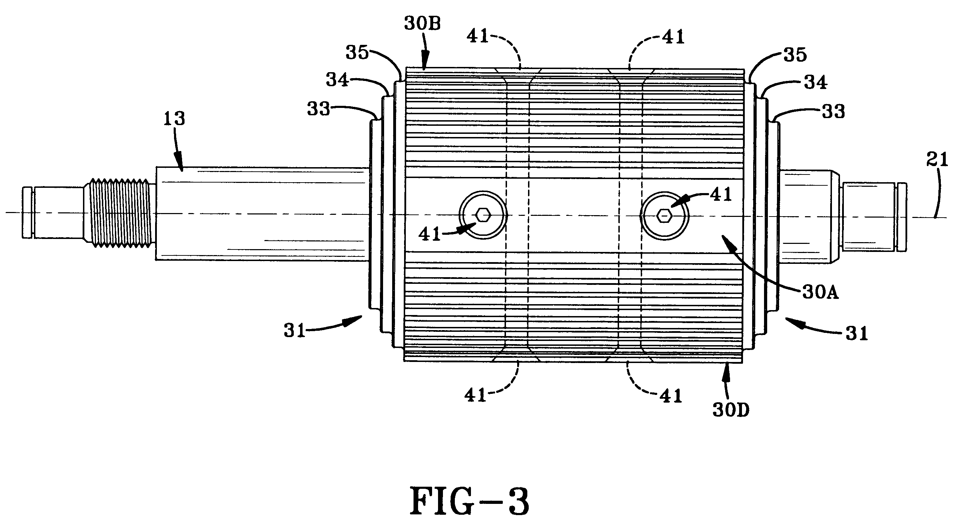

Figure 3 is a side elevational view of rotor with the end caps removed to show the axial ends of the rotor;
Figure 4 is an end view of an embodiment of composite core; and
Figure 5 is a cross-sectional view taken substantially along line 5-5 of Figure 4.

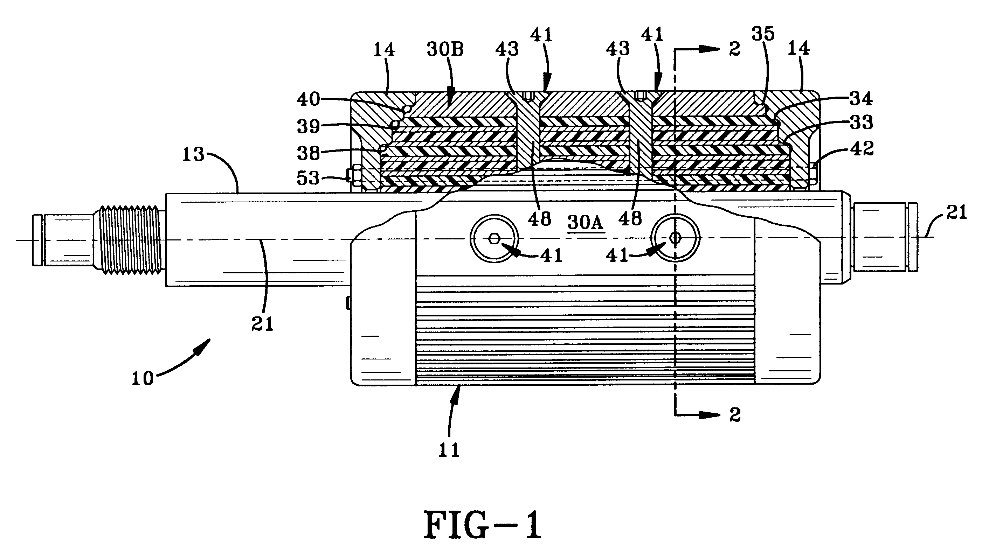

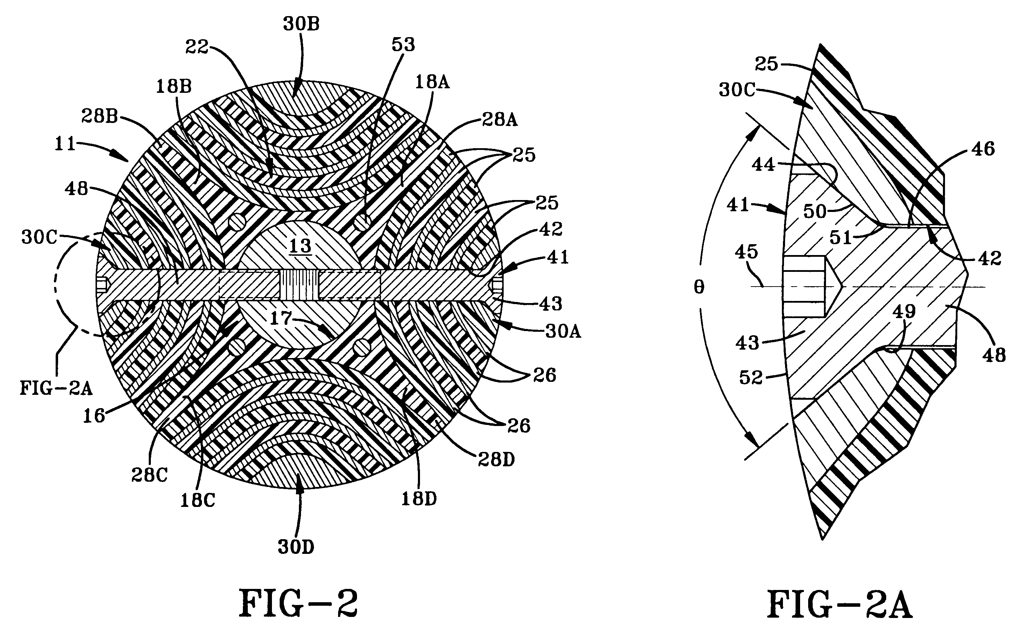

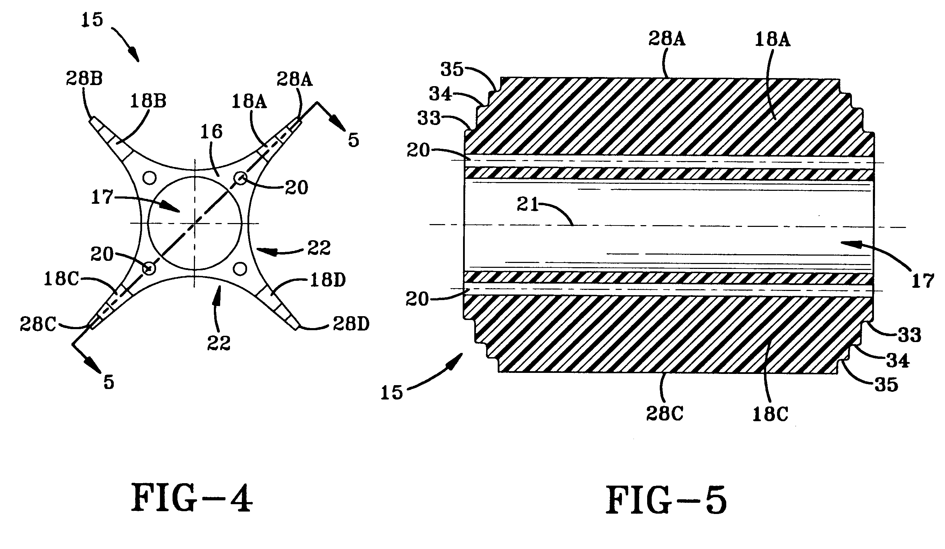

Referring to Figure 1, the rotor assembly 10 shown includes a rotor 11 carried on a shaft 13 and fitted with pair of end caps 14 which secure the core to the supporting shaft 13 and ensure radial integrity of the rotor 11 relative to the shaft 13. As best seen in Figures 2 and 4, the rotor 11 has a star-shaped core 15. The core 15 has a body portion 16 with a central axial bore 17 extending therethrough. Four equiangularly spaced arms 18A-18D radiate outwardly from the body portion and a passage 20 extends axially through each arm 18A-18D. The core 15 is preferably a composite member constructed of high tensile fibre glass which is laid with fibres oriented axially and transversely with respect to the central, longitudinal axis 21 of the rotor assembly 10. Valleys 22, which extend the full axial length of the core 15, are disposed between the adjacent arms 18 and each valley 22 has a substantially U-shaped cross-section.

The rotor 11 also includes a plurality of magnetic laminations 25 and non-magnetic, or separator, laminations 26 which fill the valleys 22. The laminations 25 and 26 are alternately disposed to provide a plurality of flux paths through the rotor 11 which cooperate with a conventional stator (not shown) to provide the motive, or reactive, forces for the machine. The magnetic laminations 25 are preferably constructed of high silicon, grain-oriented steel. The grain of the steel is oriented in a direction transverse to the longitudinal axis 21. In other words, the grain orientation is from the tip 28A of arm 18A to tip 28B of arm 18B. The high silicon steel has electrical properties which improve the field efficiency of the machine, thereby improving machine performance and reducing the maximum normal operating temperature.

The non-magnetic laminations 26 are constructed with high tensile fibre glass and high temperature curing epoxy. This provides for stable properties in the glass laminations 26 and the core 15 when the machine is operating at normal operating temperatures with a satisfactory safety factor. The epoxy bond in the laminations 26 aids in securing the magnetic laminations 25 in place. As with the core 15, the laminations 26 preferably have strands of the fibre glass oriented in the axial and transverse directions. The axial orientation of the fibre glass strands aids the critical speed of the assembly, whereas the transverse orientation of the fibre glass strands improves the resistance to centrifugal forces. Both of these characteristics improve the maximum operating speed of the motor.

The non-magnetic laminations 26 can be formed of aluminium. However, aluminium will have some eddy current losses as a result of the stator field harmonics. Inasmuch as these currents reduce the overall efficiency of the motor, the selected construction is believed to be an improvement over known synchronous reluctance machines.

The outermost lamination 25A in each valley 22 has a rotor bar 30A-30D disposed adjacent thereto. The rotor bars 30A-30D are preferably also composite members and preferably constructed with a carbon fibre centre and a high tensile strength fibre glass outer layer. The carbon fibre improves the strength of the rotor bars 30A-30D, and the glass layer prevents any current flow which might occur due to the stator field applied to the magnetic laminations 25. An identical carbon fibre and high tensile strength fibre glass construction can be used in the non-magnetic laminations 26, if desired. Such construction would further improve the maximum operating speed of the machine.

The axial ends 31 of the rotor 11 have circumferential steps 33, 34 and 35 formed thereon. The end caps 14 have complementary step portions 38, 39 and 40 formed therein. The end caps 14 overlap the axial ends of the rotor with the steps 33 to 35 engaged, respectively, by the complementary step portions 38 to 40 to provide supporting surfaces which increase the centrifugal strength of the rotor 11. End caps 14 may be most economically made of aluminium. However, titanium, which has virtually the same magnetic characteristics as aluminium, provides better strength characteristics than aluminium and is, therefore, better suited for use with machines intended for high speed applications. It should also be appreciated that filament wound end caps, while having higher manufacturing costs, are capable of providing the best overall performance.

The overlapping of the complementary steps 38 to 40 on the end caps 14 with the circumferential steps 33 to 35 on the rotor 11 lends the greatest improvement to the high speed characteristics of the machine. The steps 33 to 35 of the rotor 11 are formed after assembly of the laminations 25 and 26, and rotor bars 30A-30D, into the core 15. The laminations 25 and 26 as well as the rotor bars 30A-30D are secured to the core 15 and the supporting shaft 13 by threaded fasteners 41. The threaded fasteners 41 are preferably bolts fabricated from a beryllium-copper alloy, and have a head configuration which provides an unexpected interaction with the receiving bore 42 in each rotor bar 30 to provide as much as twice the strength of a conventional stainless steel bolt. As best seen in Figure 2A, the head portion 43 of the bolt 41 presents a conically flared engaging surface 44. The engaging surface 44 is preferably symmetrical with the central axis 45 of the bolt 41 and is flared at an angle Θ, preferably of the order of 100 degrees. The conically flared engaging surface 44 intersects the cylindrical outer surface 46 of the shaft portion 48 of the bolt 41 in a fillet 49.

The receiving bore 42 in each rotor bar 30A-30D presents an upwardly facing (as oriented in Figure 2A) conically flared engaging surface 50. The engaging surface is also flared symmetrically at an internal angle Θ in order to permit the flared engaging surface 44 on the bolt 41 matingly to engage the flared surface 50 in the receiving bore 42 on the rotor bar 30A-30D. As will become apparent, the force transfer between the bolt 41 and the rotor bar 30A-30D is transferred substantially in its entirety between the flared engaging surfaces 44 and 50. This result is assured by the configuration of the juncture between the receiving bore 42 and the engaging surface 50. Specifically, the convex juncture presents a fillet 51 having a smaller radius than the radius of fillet 49. For example, in the situation where the bolt 41 has a shaft portion 48 measuring approximately 6.3 mm (¼ inch) in diameter, the fillet 49 may have a 2.0 mm (0.08 inch) radius in comparison to radius of 2.5 mm (0.10 inches) for the fillet 51. With such dimensions, the flared engaging surfaces 44 and 50 effect the force transfer between the bolt 41 and the rotor bar 30A-30D without physical engagement between the fillets 49 and 51.

In order to preclude undesired engagement between the head portion 43 of the bolt 41 and the stator when the rotor assembly 10 if rotating, the outer surface 52 on the head portion 43 is preferably of spherical configuration with the radius being substantially equal to the radius of the rotor assembly 10. In this example, the radius of the outer surface may be of the order of 63.5 mm (2.5 inches), which is substantially equal to the radius of the rotor assembly 10. Thus, the outer surface should not extend radially outwardly beyond the outer surface of the rotor 10 when the rotor assembly 10 is completed for use in a synchronous reluctance machine.

The end caps 14 may be secured in place by threaded fasteners 53 which extend axially between the end caps 14, through the passages 20. As previously explained herein, the end caps 14 may also be filament wound. Should filament wound end caps be used, the efficiency of the rotor 11 would be even further improved by eliminating a ground path through the end caps 14. The use of filament wound end caps 14 would also permit the elimination of the threaded fasteners 53. That is, filament wound end caps 14 could be bonded to the remainder of the laminate structure comprising the rotor 11.

The circumferential steps 33 to 35 are preferably ground into the rotor 11 after the laminations 25 and 26 and rotor bars 30 are assembled to the core 15. The fasteners 41 provide the necessary retention of the components of the assembly while the ends 31 are ground.

Another manufacturing method includes assembling of the core 15, the laminations 25 and 26 and the rotor bars 30 with a layer of heat curing epoxy between adjacent components. The assembly is then passed through an induction heater which induces hardening of the epoxy. This is followed by the machining of the ends 31 to provide the circumferential steps 33 to 35. The epoxy bond also resists the centrifugal forces acting on the rotor 11 during operation of the synchronous reluctance machine in which the rotor is employed, as do the fasteners 41.

Another method of assembly which has been considered is to assemble the laminations 25 and 26 and the rotor bars 30 in place relative to the core 15, and then to secure the assembly with a circumferential clamp while the ends 31 are machined. The end caps 14 are then installed and the clamp removed. This method reduces the manufacturing time and cost, but the maximum speed attainable may be reduced.

The high silicon steel used for the magnetic lamination 25 results in a very high magnetic performance index ratio, in the range of approximately 15.6. The composite separator laminations 26 and core 15 structure contribute to the improved speed characteristics and reduced eddy current losses. Also contributing to the high speed characteristic of the improved synchronous reluctance machine is the end cap structure.

Synchronous reluctance machines constructed in the above-described manner have been operated at speed in excess of 16,000 revolutions per minute (rpm) and are expected to be capable of operating speeds in the range of 25,000 to 30,000 rpm with power levels greater than 150 horsepower.

The disclosures in United States patent application no. 048,913, from which this application claims priority, and in the abstract accompanying this application are incorporated herein by reference.

## Claims

1. A rotor assembly comprising a supporting shaft member (13); a core (15) carried on the supporting shaft member and including a body with substantially equiangularly spaced, radially extending arm means (18A-18C) forming axially extending cavities between adjacent arm means; a plurality of axially extending magnetic laminations (25) disposed in the cavities; a plurality of axially extending non-magnetic laminations (26) disposed in the cavities and interleaved with the magnetic laminations, the core and laminations forming a plurality of end surfaces (33-35) with an inner end surface (33) having a greater axial length than an adjacent radially outer end surface (34); and end cap means (14) secured to and covering the end surfaces and including a mating surface (38-40) substantially complementary to the end surfaces of the core and laminations.

2. A rotor assembly according to claim 1, wherein the core is formed from high tensile strength fibre glass strands, portions of the strands of fibre glass being substantially perpendicular to one another and at least some strands extending along a rotational axis of the rotor assembly.

3. A rotor assembly according to claim 1 or 2, comprising at least one rotor bar (30A-30D) secured adjacent an outermost lamination (25) and including end surfaces complementary to and overlapped by the mating surface of the end cap means.

4. A rotor assembly according to claim 3, wherein the end cap means overlies the rotor bar, the laminations and the core.

5. A rotor assembly according to claim 3 or 4, comprising fastening means (41) attached to the core; the or at least one rotor bar being provided with a bore (42) for receiving a shaft portion of the fastening means, the bore including a conically flared engaging surface (44) for engaging a conically flared engaging surface of a head portion of the fastening means.

6. A rotor assembly according to claim 5, wherein the conically flared engaging surfaces of the bore and the fastening means are substantially symmetrical and have an internal angle (Θ) of approximately 100 degrees.

7. A rotor assembly according to claim 5 or 6, wherein the rotor assembly is substantially circular in axial cross-section, an outer surface of the fastening means having a curvature substantially equal to the curvature of the rotor assembly.

8. A rotor assembly according to claim 5, 6 or 7, wherein the conically flared engaging surfaces of the bore and the fastening means constitute the sole means for effecting force transfer between the fastening means and the rotor bar.

9. A rotor assembly according to any one of claims 5 to 8, wherein the fastening means is formed from a beryllium-copper alloy.

10. A rotor assembly according to any one of claims 3 to 9, wherein the or each rotor bar is formed from non-magnetic material.

11. A rotor assembly according to any preceding claim, wherein the end surfaces (33-35) of the core and laminations are disposed in step like manner.
